# EUROPEAN PATENT SPECIFICATION

(11) **EP 2 169 248 B1**
(45) Date of publication and mention of the grant of the patent: **05.03.2014**
(21) Application number: 09252204.4
(22) Date of filing: 16.09.2009
(51) Int. Cl.: F16D 13/56

(54) **Multiple disc clutch**
Kupplung mit mehreren Scheiben
Embrayage à disques multiples

(30) Priority: 30.09.2008 JP 2008255102
(43) Date of publication of application: 31.03.2010
(73) Proprietor: Honda Motor Co., Ltd., Minato-ku Tokyo 107-8556 (JP)
(72) Inventor: Gokan, Yoshitsugu, Wako-shi Saitama 351-0193 (JP); Kawatsu, Hirotaka, Wako-shi Saitama 351-0193 (JP)
(74) Representative: Stevens, Jason Paul

(56) References cited:
- JP-A- 2 150 517
- JP-A- 2008 039 082
- US-A1- 2008 029 332

## Description

The present invention relates to a multiple disc clutch provided with a clutch outer coupled to an input member, plural driving friction plates fitted to the clutch outer so as to rotate with it, plural driven friction plates arranged alternately with the driving friction plates, a pressing member which rotates together with an output shaft and is axially movable so as to compress the driving friction plates and the driven friction plates, an annular set plate provided on the side of the pressing member so as to receive a load from a clutch spring that axially presses the pressing member, and a cam plate fixed to the pressing member so as to enable an increase or decrease in the frictional force of the driving friction plates and the driven fiction plates.

A multiple disc clutch in which a periphery of a set plate is in contact with and fitted to a stage formed on an inner circumference of a pressing member is known from JP-A No. 2008-038954.

However, in the multiple disc clutch disclosed in JP-A No. 2008-038954, the area of the stage which contacts the periphery of the set plate is small, and so there is a demand for the area for receiving the set plate to be increased, for the strength for supporting the set plate that receives the load from the clutch spring to be enhanced, and for the load from the clutch spring to be securely received by the set plate. However, as a cam plate is arranged radially within the pressing member, increasing the area of the stage may lead to a intricate shape for the pressing member.

The present invention is made in view of such a situation and it is an object of at least the preferred embodiments of the present invention to provide a multiple disc clutch where the area for receiving the set plate is extended using few parts, while preventing the shape of the pressing member from being intricate and enhancing the strength for supporting the set plate.

According to a first aspect of the present invention, there is provided a multiple disc clutch comprising: a clutch outer coupled to an input member; a plurality of driving friction plates fitted to the clutch outer so as to rotate therewith; a plurality of driven friction plates arranged alternately with the driving friction plates; a pressing member which rotates together with an output shaft and which can be axially moved so as to compress the driving friction plates and the driven friction plates; an annular set plate provided on a side of the pressing member so as to receive a load from a clutch spring that axially presses the pressing member; and a cam plate fixed to the pressing member which allows an increase or reduction in the frictional force of the driving friction plates and the driven friction plates, wherein: a part of the set plate is axially in contact with the cam plate.

As a part of the set plate is axially in contact with the cam plate, the area for receiving the set plate can be easily extended and strength for supporting the set plate can be enhanced with a simple configuration while avoiding an increase of the number of parts.

Preferably, the set plate is jointly fastened to the pressing member together with the cam plate by plural bolts for joint fastening.

With this arrangement, there is no need for dedicated bolts for fixing the set plate, and the set plate can be securely fixed to the side of the pressing member while avoiding an increase of the number of parts.

It is further preferred for the cam plate to be fastened to the pressing member by plural reamer bolts in addition to the plural bolts for joint fastening. The cam plate can then be firmly fastened to the pressing member in parts fixed by the reamer bolts.

In a particularly preferred form, the cam plate is fastened to the pressing member by three reamer bolts in addition to three bolts for joint fastening. The cam plate and the set plate can then be fixed to the pressing member by a minimal number of bolts.

Preferably, the bolts for joint fastening and the reamer bolts are arranged at equal intervals or alternately at intervals in a circumferential direction of the pressing member. With this arrangement, the cam plate and the set plate can be stably fixed to the pressing member with uniform force in the circumferential direction.

Preferably, a part of each reamer bolt projects radially inwardly from an inner circumference of the set plate when the part is viewed from an axial direction of the pressing member. Thus, it is easy to check whether or not the reamer bolt is fastened during maintenance.

In a preferred form, a narrow part is formed in the set plate between each pair of bolts for joint fastening, such that the radial width of the narrow part is smaller at least than a diameter of each extended head of each bolt for joint fastening.

As the narrow part is formed in the set plate between each pair of bolts for joint fastening, distortion caused when the bolts for joint fastening are fastened can be absorbed by deformation of the narrow part.

Preferably, a plurality of first housing concave portions open on the reverse side to the cam plate are provided on the set plate; and the extended heads of the plurality of bolts for joint fastening are housed in the first housing concave portions so as to avoid projecting from the set plate protruding on the side of the clutch spring.

With this arrangement, interference between the clutch spring and the bolts for joint fastening is avoided and a set load can be stabilized.

Preferably, a plurality of second housing concave portions open on the side of the cam plate are provided on the set plate so as to house extended heads of the plural reamer bolts. Thus, interference between the reamer bolt and the set plate can be avoided, and it is not necessary to increase the diameters of the cam plate and the pressing member.

A main shaft 11 in an embodiment corresponds to the output shaft in the present invention, a primary driven gear 16 in the embodiment corresponds to the input member in the present invention, a clutch inner 18 in the embodiment corresponds to the pressing member in the present invention, and a slipper cam plate 26 in the embodiment corresponds to the cam plate in the present invention.

A preferred embodiment of the invention will now be described by way of example only and with reference to the accompanying drawings, in which:
Fig. 1 is a sectional view showing a multiple disc clutch;
Fig. 2 is an exploded perspective view showing a centre cam, an assist cam, a slipper cam, a coned disc spring, a pressure plate and a fixing holder;
Fig. 3 is a development sectional view showing an assist cam mechanism and a back torque limiter mechanism respectively;
Fig. 4 is a sectional view taken along line 4-4 in Fig. 1; and
Fig. 5 is a sectional view taken along line 5-5 in Fig. 4.

Referring to the attached drawings, an embodiment of the present invention will be described below.

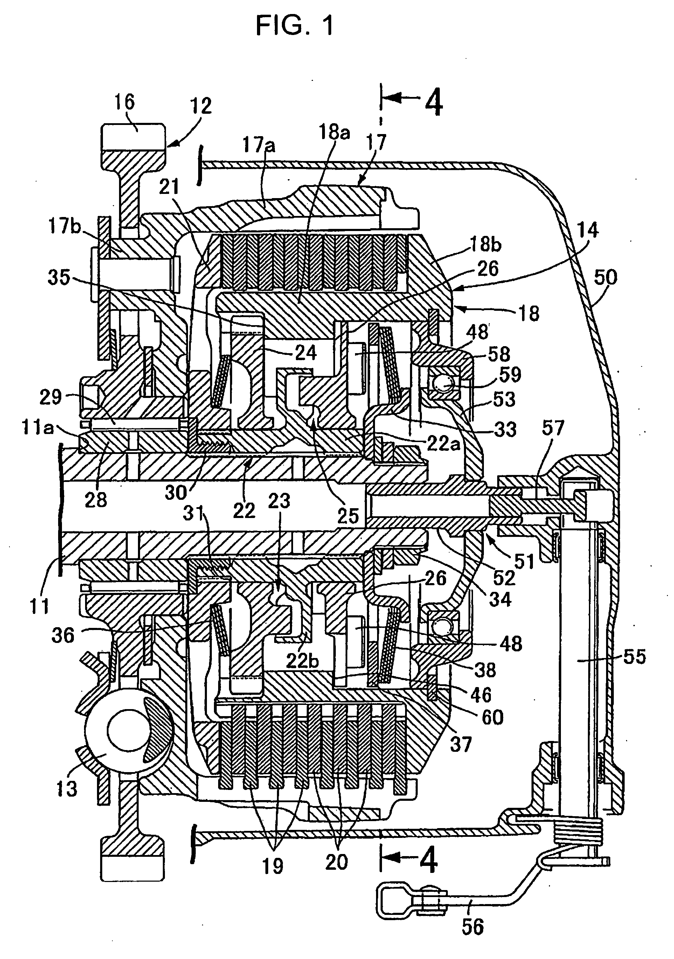

First, with reference to Fig. 1, a primary reduction gear 12, a damping spring 13 and a multiple disc clutch 14 are provided between a crankshaft (not shown) of an engine (for example a motorcycle engine) and a main shaft 11 of a gear shift unit (not shown). The primary reduction gear 12 is formed from a primary driving gear (not shown) provided on the crankshaft, and a primary driven gear 16 which is engaged with the primary driving gear. The primary driven gear 16 is rotatably supported on the main shaft 11.

The multiple disc clutch 14 is provided with: a clutch outer 17 coupled to the primary driven gear 16, which serves as an input member, via the damping spring 13; a clutch inner 18 having a cylindrical part 18a coaxially arranged inside the clutch outer 17 and a pressurizing plate part 18b integrally formed with one end of the cylindrical part 18a; plural driving friction plates 19 fitted to the clutch outer 17 so that the driving friction plates cannot rotate relative to the clutch outer 17; plural driven friction plates 20 arranged alternately with the driving friction plates 19 and fitted to the cylindrical part 18a of the clutch inner 18 so that the driven friction plates cannot rotate relative to the clutch inner 18; a pressure plate 21 which is fixed to the main shaft 11, with the alternately overlapped driving friction plates 19 and driven friction plates 20 being sandwiched between the pressure plate 21 and the pressurizing plate part 18b; a centre cam 22 having a disc part 22b arranged in a plane perpendicular to an axis of the main shaft 11, arranged radially inside the cylindrical part 18a and fixed to the main shaft 11; an assist cam plate 24 facing one surface of the disc part 22b, which assist cam plate 24 cannot rotate relative to the clutch inner 18; and a slipper cam plate 26 fixed to the clutch inner 18 and facing the other surface of the disc part 22b.

The clutch outer 17 is integrally formed from a cylindrical part 17a coaxially enclosing the cylindrical part 18a of the clutch inner 18, and an end wall part 17b which is connected to the end of the cylindrical part 17a nearer the primary driven gear 16, and which is formed in the shape of a bowl open on the side opposite to the primary driven gear 16. Peripheral parts of the plural driving friction plates 19 are fitted to the cylindrical part 17a so that the peripheral parts can be moved axially and cannot rotate relative to the cylindrical part 17a.

The clutch inner 18 is formed from the cylindrical part 18a and the integral pressurizing plate part 18b, which projects radially from one end of the cylindrical part 18a.

An annular stage 11a opposite to the side of the multiple disc clutch 14 is formed on the periphery of the main shaft 11 at a part corresponding to the primary reduction gear 12. A cylindrical sleeve 28 is fitted around the main shaft 11 on the side opposite to the multiple disc clutch 14, and one end of the sleeve 28 is in contact with the annular stage 11a. A needle bearing 29 is inserted between the periphery of the sleeve 28 and an inner circumference of the primary driven gear 16.

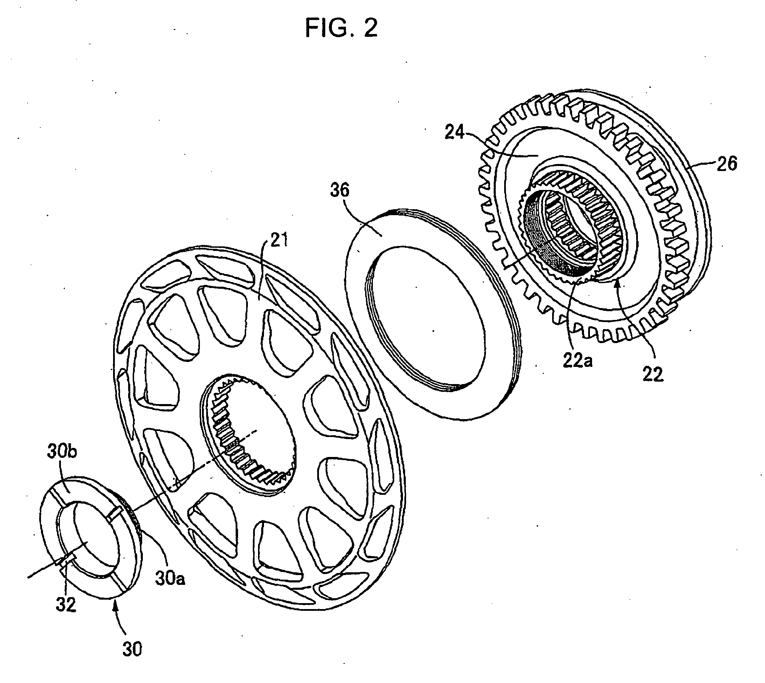

Also referring to Fig. 2, the centre cam 22 is integrally provided with a cylindrical boss 22a which is fitted to the periphery of the main shaft 11 via splines. The disc part 22b (see Fig. 1) projects radially outwardly from an axially intermediate part of the boss 22a, and is arranged in the plane perpendicular to the axial direction of the main shaft 11. The pressure plate 21 is formed in the shape of a disc, and a fixing holder 30 that detachably fixes the pressure plate 21 to the boss 22a is detachably attached to the boss 22a.

The fixing holder 30 is screwed to the boss 22a. A stage 31 is provided on the periphery of the boss 22a between an inner circumference of the pressure plate 21 and the holder, and the inner circumference of the pressure plate 21 is fitted to the periphery of the boss 22a via splines.

The fixing holder 30 is integrally formed from a cylindrical threaded shank 30a screwed to the end of the boss 22a nearer the sleeve 28, and a flange 30b which projects radially outwardly of the boss 22a and which is connected to an outer end of the threaded shank 30a. The inner circumference of the pressure plate 21 is held between the stage 31 of the boss 22a and the flange 30b.

In addition, a cross-shaped fitting groove 32 (for example, for fitting a turning tool) is provided on an outer end face of the fixing holder 30 (an outer end face of the flange 30b in this embodiment).

A nut 34 is screwed to one end of the main shaft 11, and an annular spring retainer 33 is clamped between the nut and one end of the boss 22a of the centre cam 22. The flange 30b of the fixing holder 30, the boss 22a of the centre cam 22 and the spring retainer 33 are held between the annular stage 11a and the nut 34 by tightening the nut 34, and the boss 22a is fitted to the periphery of the main shaft 11 via splines. Thus, the centre cam 22 and the pressure plate 21 are fixed to the main shaft 11.

The assist cam plate 24 configures an assist cam mechanism 23 that moves the clutch inner 18 so that the pressurizing plate part 18b is brought closer to the pressure plate 21 when there is an increase of driving force input from the primary driven gear 16 in collaboration with the centre cam 22. In addition, the slipper cam plate 26 configures a back torque limiter mechanism 25 that moves the clutch inner 18 so that the pressurizing plate part 18b is moved away from the pressure plate 21 when there is an increase of back torque from the main shaft 11 in collaboration with the centre cam 22.

The periphery of the assist cam plate 24 is supported by the boss 22a of the centre cam 22 so that it can move in the axial direction, and is fitted to the inner circumference of the cylindrical part 18a of the clutch inner 18 via splines. An annular regulating stage 35 that regulates the movement of the assist cam plate 24 towards the disc part 22b is formed on the inner circumference of the cylindrical part 18a so that the regulating stage can be touched to the periphery of the assist cam plate 24. The periphery of the slipper cam plate 26, which holds the disc part 22b of the centre cam 22 between the slipper cam plate and the assist cam plate 24, is fixed to the cylindrical part 18a of the clutch inner 18.

A sub clutch spring 36 that presses the assist cam plate 24 towards the disc part 22b of the centre cam 22 is inserted between the assist cam plate 24 and the pressure plate 21, and is for example formed from a stack of coned disc springs.

The slipper cam plate 26 is arranged between the disc part 22b of the centre cam 22 and an annular set plate 37 fixed to the cylindrical part 18a of the clutch inner 18, and is fixed to the cylindrical part 18a. A clutch spring 38, which may be formed from a stack of coned disc springs, is provided between the spring retainer 33 (which is fixed to the main shaft 11) and the set plate 37. The clutch inner 18 is pressed by the clutch spring 38 so that the pressurizing plate part 18b is urged towards the pressure plate 21, that is, the side on which the driving friction plates 19 and the driven friction plates 20 are fitted and the multiple disc clutch 14 is connected by resilience produced by the clutch spring 38.

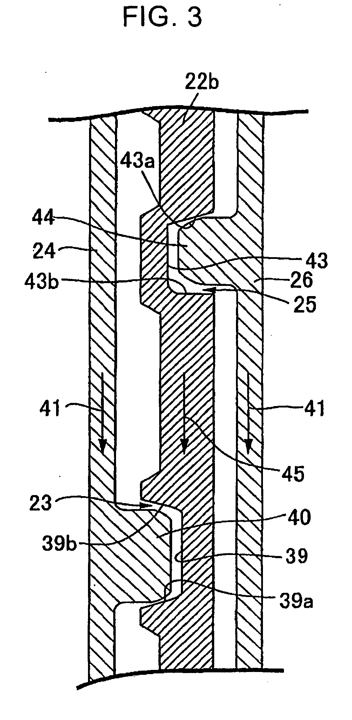

As shown in Fig. 3, in the assist cam mechanism 23, plural projections 40 which project from the assist cam plate 24 are inserted into plural concave portions 39 provided on one surface of the disc part 22b of the centre cam 22. When the clutch inner 18 rotates in a direction shown by an arrow 41 in Fig. 3 while motive power is transmitted from the primary driven gear 16 to the main shaft 11 via the multiple disc clutch 14 in a connected state, each first slanting contact face 39a, which is slanting and located in front in a rotational direction 41 toward the side of the assist cam plate 24, is formed on a forward face in the rotational direction 41 of each concave portion 39, and each second slanting contact face 39b, which is slanting and located behind in the rotational direction 41 toward the side of the assist cam plate 24, is formed on a backward face in the rotational direction 41 of each concave portion 39.

When torque fluctuation on the side of acceleration occurs while the torque is transmitted between the primary driven gear 16 and the main shaft 11, each projection 40 of the assist cam plate 24 comes into contact with the first slanting contact face 39a of each concave portion 39 of the disc part 22b of the centre cam 22. A force tending to separate the assist cam plate 24 from the disc part 22b of the centre cam 22 acts on the assist cam plate 24 from the disc part 22b, pressure in a reverse direction by the sub clutch spring 33 that negates the pressure of the clutch spring 38 is damped, the pressure by the clutch spring 38 is completely enforced, and the compressive force of the driving friction plates 19 and the driven friction plates 20 is increased.

In the back torque limiter mechanism 25, plural projections 44 which project from the slipper cam plate 26 are inserted into plural concave portions 43 provided on the other surface of the disc part 22b of the centre cam 22. When torque fluctuation on the side of deceleration occurs while the multiple disc clutch 14 is connected, each third slanting contact face 43a, which is slanting and located behind in a rotational direction 45 toward the side of the slipper cam plate 26, is formed on a backward face in the rotational direction 45 of each concave portion 43 when a rotational direction of the centre cam 22 is the direction shown by an arrow 45, and each fourth slanting contact face 43b, which is slanting and located in front in the rotational direction 45 toward the side of the slipper cam plate 26, is formed on a forward face in the rotational direction 45 of each concave portion 43.

When torque fluctuation on the side of deceleration occurs while the torque is transmitted between the primary driven gear 16 and the main shaft 11, the third slanting contact face 43a of each concave portion 43 of the disc part 22b of the centre cam 22 comes into contact with each projection 44 of the slipper cam plate 26. A force tending to separate the slipper cam plate 26 from the disc part 22b of the centre cam 22 acts on the slipper cam plate 26 from the disc part 22b, the pressure of the clutch spring 38 is damped, and the compressive force of the driving friction plates 19 and the driven friction plates 20, 20 is reduced.

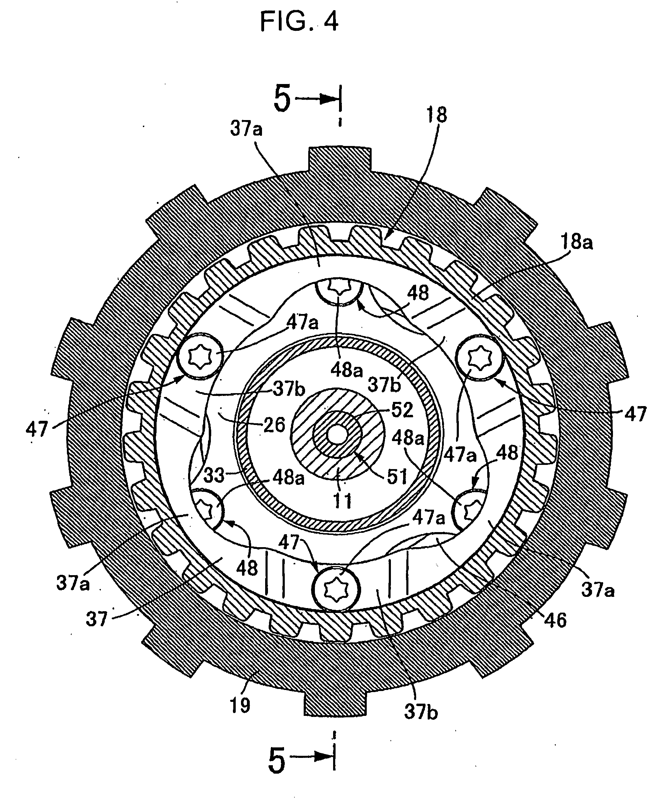

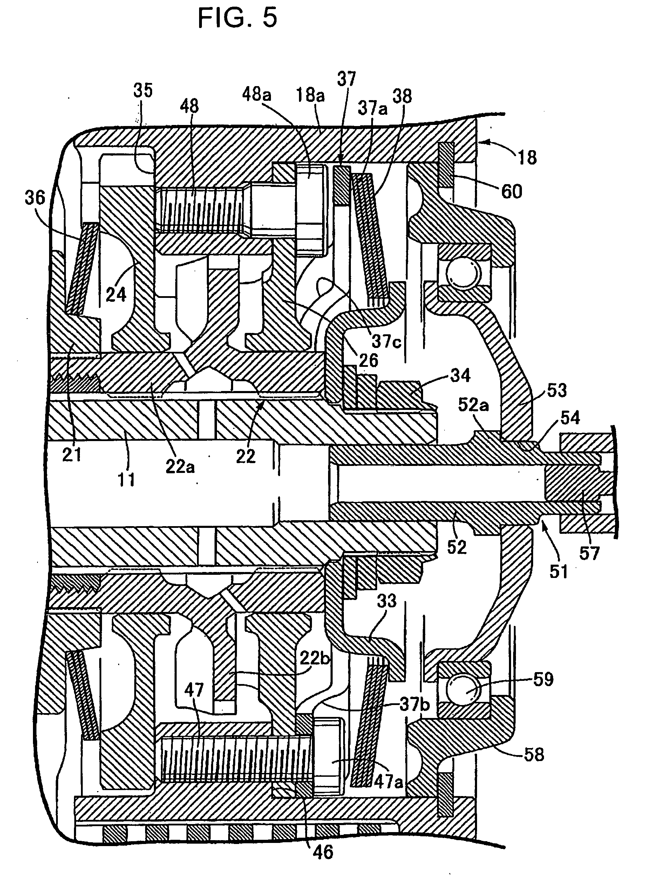

Also referring to Figs. 4 and 5, an annular mounting stage 46 facing the side of the slipper cam plate 26 is formed on the inner circumference of the cylindrical part 18a of the clutch inner 18, on the opposite side to the regulating stage 35. The periphery of the slipper cam plate 26 is in contact with and fixed to the mounting stage 46. A part of the set plate 37 is in contact with the slipper cam plate 26 in the axial direction, and in this embodiment, the set plate 37 is formed so that plural locations spaced around the peripheral direction of the set plate 37 are touched to the periphery of the slipper cam plate 26.

In addition, the set plate 37 is jointly fastened to the mounting stage 46 in the cylindrical part 18a of the clutch inner 18 together with the slipper cam plate 26 by plural bolts for joint fastening 47, and the slipper cam plate 26 is fastened to the mounting stage 46 by plural reamer bolts 48 in addition to the bolts for joint fastening 47.

There are three bolts for joint fastening 47 and three reamer bolts 48, and the bolts for joint fastening 47 and the reamer bolts 48 are arranged at equal intervals or alternately at an interval in a circumferential direction of the clutch inner 18. In this embodiment, the bolts for joint fastening 47 and the reamer bolts 48 are arranged at an equal interval in the circumferential direction.

Further, each reamer bolt 48 is arranged so that a part of each reamer bolt 48 projects radially inwardly from an inner circumference of the set plate 37 when each reamer bolt is viewed in an axial direction of the clutch inner 18, and narrow parts 37a whose width in the radial direction of the clutch inner 18 is smaller than a diameter of each extended head 47a of each bolt for joint fastening 47 are formed between the bolts for joint fastening 47 of the set plate 37.

The set plate 37 is separate from the slipper cam plate 26 between parts in which the set plate is fastened by the bolts for joint fastening 47, to avoid interference with the reamer bolts 48, though the set plate is in contact with the periphery of the slipper cam plate 26 in the part of the set plate where it is fastened by the bolts for joint fastening 47. Plural first housing concave portions 37b which open away from the slipper cam plate 26 and plural second housing concave portions 37c which open towards the slipper cam plate 26 are provided on the set plate 37, with the first and second housing concave portions alternately arranged in a circumferential direction of the set plate, such that the set plate 37 is formed in a wavy state in the circumferential direction.

In addition, each extended head 47a of each bolt for joint fastening 47 is housed in each first housing concave portion 37b so that each extended head is not protruded on the side of the clutch spring 38 from the set plate 37 and each extended head 48a of each reamer bolt 48 is housed in each second housing concave portion 37c. Each narrow part 37a forms a part of each second housing concave portion 37c.

The multiple disc clutch 14 is covered with an engine cover 50 with which the engine is provided. A clutch lifter 51, arranged coaxially with the clutch inner 18, is supported by the main shaft 11 and the engine cover 50 so that it can be moved in the axial direction, and in particular in the axial direction opposite to the direction in which the clutch inner 18 is pressed by the clutch spring 38.

The clutch lifter 51 is formed from a lifter pin 52 which is coaxial with the clutch inner 18, and a dished holding member 53 which is formed as a separate member from the lifter pin 52 and attached to an intermediate part of the lifter pin 52.

One end of the lifter pin 52 is slideably fitted to the engine cover 50 and the other end of the lifter pin 52 is slideably fitted to the main shaft 11. In addition, a mounting flange 52a projecting radially outwardly is formed at an intermediate part of the lifter pin 52. An insertion hole 54 into which the lifter pin 52 is inserted is provided at the centre of the holding member 53, and the holding member 53 is attached to the lifter pin 52 by fitting a circumferential edge of the insertion hole 54 to the mounting flange 52a from the outside in the axial direction.

An operating shaft 55 for switching the engagement/the disengagement of the multiple disc clutch 14 is turnably supported by the engine cover 50, and a lever 56 is provided on an end of the operating shaft 55 which projects from the engine cover 50. One end of a transmission shaft 57 which is displaced in the axial direction according to the turning of the operating shaft 55 is fitted to an inner end of the operating shaft 55, and the other end of the transmission shaft 57 is coaxially coupled to one end of the lifter pin 52 in the clutch lifter 51.

An annular lifter plate 58 that moves the clutch inner 18 in the direction opposite to the direction in which it is pressed by the clutch spring 38, according to the displacement in the axial direction of the clutch lifter 51, is held on the periphery of the clutch lifter 51 (that is, on the periphery of the holding member 53) via a clutch bearing 59.

In addition, a snap ring 60 which is fitted to and is in contact with the periphery of the lifter plate 58 in the direction pressed by the clutch spring 38 is installed on an inner circumference of one end of the cylindrical part 18a in the clutch inner 18.

The clutch spring 38 is arranged inside the clutch bearing 59 in the axial direction and radially outside of the nut 34, and the lifter plate 58 and the holding member 53 are arranged outside the clutch spring 38 in the axial direction of the main shaft 11.

Further, the clutch bearing 59 is arranged outside the nut 34 with a part of the clutch bearing overlapped with the nut 34 in a side view.

Next, to explain the action of this embodiment, the sub clutch spring 36 is provided among the clutch inner 18, the pressure plate 21 fixed to the main shaft 11 and the assist cam plate 24 contacting the regulating stage 35 of the clutch inner 18. As the fixing holder 30 that detachably fixes the pressure plate 21 to the periphery of the cylindrical boss 22a (with which the centre cam 22 fixed to the main shaft 11 is provided) is detachably attached to the boss 22a, the centre cam 22 and the pressure plate 21 can be prevented from being separated by the resilience of the sub clutch spring 36 in maintenance, the centre cam 22 and the pressure plate 21 can be sub-assembled into simple structure, and the ease of handling, the maintainability and the ease of assembly can be enhanced.

As the fixing holder 30 is screwed to the boss 22a with the fixing holder holding the pressure plate 21 between the fixing holder and the boss 22a, these members can be disassembled if necessary and the maintainability can be enhanced. In addition, the fitting groove 32 for fitting a turning tool may be provided on the outer end face of the fixing holder 30, the fixing holder 30 can be made axially compact without having an operating part for turning the fixing holder 30 projecting axially, and thus, the multiple disc clutch 14 can be made axially compact.

As the pressure plate 21 is fitted to the periphery of the boss 22a via splines, rotational displacement of the pressure plate 21 relative to the main shaft 11 and the centre cam 22 can be securely prevented.

Further, as the fixing holder 30 is integrally provided with the threaded shank 30a screwed to the boss 22a and the flange 30b projecting radially from the periphery of the boss 22a and linked to the outer end of the threaded shank 30a, and the pressure plate 21 is held between the stage 31 provided on the periphery of the boss 22a and the flange 30b, the centre cam 22 and the pressure plate 21 can be disassembled if necessary and the maintainability can be enhanced.

The clutch inner 18 is axially pressed by the clutch spring 38. The lifter plate 58 that moves the clutch inner 18 against the direction of urging of the clutch spring 38 according to the axial movement of the clutch lifter 51 is held via clutch bearing 59 by the periphery of the clutch lifter 51, which can be moved in the opposite direction to the direction in which the clutch inner 18 is urged by the clutch spring 38 and which is arranged coaxially with the clutch inner 18. The clutch lifter 51 is formed from the lifter pin 52, which is coaxial with the clutch inner 18, and the dished holding member 53, which is formed as a separate member from the lifter pin 52 and which is attached to the intermediate part of the lifter pin 52.

Therefore, when the size of the clutch bearing 59 is changed, only the shape of the holding member 53 needs to be changed; the lifter pin 52 can remain unchanged, and so the cost of the clutch lifter 51 can be reduced.

In addition, as the clutch spring 38 is located inside the clutch bearing 59 (which is provided between the holding member 53 and the lifter plate 58) in the axial direction, and is arranged outside the nut 34 (which is screwed to the main shaft 11 to fix the centre cam 22 to the main shaft 11), the clutch spring 38 is arranged effectively utilizing space around the nut 34 and the size of the multiple disc clutch 14 can be reduced.

As the snap ring 60 which is in contact with the periphery of the lifter plate 58 is installed on the inner circumference at one end of the cylindrical part 18a of the clutch inner 18, simple assembly is enabled even though the snap ring is a separate member from the clutch inner 18 and the lifter plate 58, and axial movement of the lifter plate 58 can be transmitted to the clutch inner 18 with a simple structure.

As the clutch spring 38 is arranged radially within the clutch inner 18, and the lifter plate 58 and the holding member 53 are arranged outside the clutch spring 38 in the axial direction of the main shaft 11, the clutch spring 38 can be covered and protected by the clutch inner 18, the lifter plate 58 and the holding member 53. Oil is prevented from being splashed on the clutch spring 38 and a drag (ie resistance to motion) of the clutch spring 38 can be prevented from being caused, or at least reduced.

As the clutch bearing 59 is arranged outside the nut 34 with a part of the clutch bearing overlapped with the nut 34 in a side view, it can contribute to the compactness in the axial direction of the multiple disc clutch 14.

As a part of the ring-shaped set plate 37 provided on the side of the clutch inner 18 so as to receive a load from the clutch spring 38 that presses the clutch inner 18 in the axial direction is in contact with the slipper cam plate 26 fixed to the clutch inner 18 in the axial direction so as to enable reducing frictional force for fitting the driving friction plates 19 and the driven friction plates 20, the area in which the set plate 37 is in contact can be easily extended, and strength for supporting the set plate 37 can be enhanced with a simple configuration in which an increase of the number of parts is avoided.

In addition, as the set plate 37 is jointly fastened to the clutch inner 18 together with the slipper cam plate 26 by the plural bolts for joint fastening 47, no dedicated bolts for fixing the set plate 37 are required, and the set plate 37 can be securely fixed on the side of the clutch inner 18 while avoiding an increase of the number of parts.

As the slipper cam plate 26 is fastened to the clutch inner 18 by the plural reamer bolts 48 in addition to the plural bolts for joint fastening 47, the slipper cam plate 26 can be firmly fastened to the clutch inner 18 in those parts which are fixed by the reamer bolts 48.

As the slipper cam plate 26 is fastened to the clutch inner 18 by the three reamer bolts 48 in addition to the three bolts for joint fastening 47, the slipper cam plate 26 and the set plate 37 can be fixed to the clutch inner 18 with the minimum number of bolts. Further, as the bolts for joint fastening 47 and the reamer bolts 48 are arranged at equal intervals around the circumferential direction of the clutch inner 18, the slipper cam plate 26 and the set plate 37 can be fixed to the clutch inner 18 stably with uniform force in the circumferential direction.

As a part of each reamer bolt 48 projects radially inwardly from the inner circumference of the set plate 37 when the part is viewed from the axial direction of the clutch inner 18, a situation in which each reamer bolt 48 is fastened can be easily checked in maintenance.

Each narrow part 37a, whose radial width is made smaller at least than the diameter of each extended head 47a of each joint fastening bolt 47, is formed in the set plate 37 between the bolts for joint fastening 47, and so distortion caused when each bolt for joint fastening 47 is fastened can be absorbed by the deformation of each narrow part 37a.

As the first housing concave portions 37b are provided on the set plate 37 and each extended head 47a of each bolt for joint fastening 47 is housed in each first housing concave portion 37b to prevent each extended head from projecting from the set plate 37 on the side of the clutch spring 38, interference between the clutch spring 38 and each bolt for joint fastening 47 is avoided, and a setting load can be stabilized.

Further, as each extended head 48a of each reamer bolt 48 is housed in each second housing concave portion 37c provided on the set plate 37, interference between each reamer bolt 48 and the set plate 37 can be avoided.

A preferred embodiment of the present invention has been described; however, the present invention is not limited to the embodiment and various changes in design without deviating from the present invention disclosed in the scope of the claims are allowed.

## Claims

1. A multiple disc clutch comprising:
a clutch outer (17) coupled to an input member (16);
a plurality of driving friction plates (19) fitted to the clutch outer (17) so as to rotate therewith;
a plurality of driven friction plates (20) arranged alternately with the driving friction plates (19);
a pressing member (18) which rotates together with an output shaft (11) and which can be axially moved so as to compress the driving friction plates (19) and the driven friction plates (20);
an annular set plate (37) provided on a side of the pressing member (18) so as to receive a load from a clutch spring (38) that axially presses the pressing member (18); and
a cam plate (26) fixed to the pressing member (18) which allows an increase or reduction in the frictional force of the driving friction plates (19) and the driven friction plates (20), **characterised in that**
a part of the set plate (37) is axially in contact with the cam plate (26).

2. The multiple disc clutch according to Claim 1, wherein the set plate (37) is jointly fastened to the pressing member (18) together with the cam plate (26) by a plurality of bolts (47) for joint fastening.

3. The multiple disc clutch according to Claim 2, wherein the cam plate (26) is fastened to the pressing member (18) by a plurality of reamer bolts (48) in addition to the plurality of bolts (47) for joint fastening.

4. The multiple disc clutch according to Claim 3, wherein the cam plate (26) is fastened to the pressing member (18) by three reamer bolts (48) in addition to three bolts (47) for joint fastening.

5. The multiple disc clutch according to Claim 4, wherein the bolts (47) for joint fastening and the reamer bolts (48) are arranged at equal intervals or alternately at intervals in a circumferential direction of the pressing member (18).

6. The multiple disc clutch according to any of Claims 3 to 5, wherein a part of each reamer bolt (48) projects radially inwardly from an inner circumference of the set plate (37) when the part is viewed from an axial direction of the pressing member (18).

7. The multiple disc clutch according to Claim 2, wherein a narrow part (37a) is formed in the set plate (37) between each pair of bolts (47) for joint fastening, such that the radial width of the narrow part (37a) is smaller at least than a diameter of each extended head (47a) of each bolt for joint fastening (47).

8. The multiple disc clutch according to Claim 2, wherein:
a plurality of first housing concave portions (37b) open on the reverse side to the cam plate (26) are provided on the set plate (37); and
the extended heads (47a) of the plurality of bolts (47) for joint fastening are housed in the first housing concave portions (37b) so as to avoid projecting from the set plate (37) protruding on the side of the clutch spring (38).

9. The multiple disc clutch according to Claim 3, wherein a plurality of second housing concave portions (37c) open on the side of the cam plate (26) are provided on the set plate (37) so as to house extended heads (48a) of the plurality of reamer bolts (48).

## Patentansprüche

1. Lamellenkupplung, die aufweist:
ein Kupplungsaußenteil (17), das mit einem Eingangsglied (16) verbunden ist;
eine Vielzahl von Antriebsreibungsscheiben (19), die an dem Kupplungsaußenteil (17) derart angebracht sind, dass sie sich damit mitdrehen;
eine Vielzahl von angetriebenen Reibungsscheiben (20), die abwechselnd mit den Antriebsreibungsscheiben (19) angeordnet sind;
ein Druckelement (18), das sich mit einer Ausgangswelle (11) mitdreht und das axial bewegt werden kann, um die Antriebsreibungsplatten (19) und die angetriebenen Reibungsplatten (20) zusammenzudrücken;
eine ringförmige Einstellplatte (37), die auf einer Seite des Druckelements (18) bereitgestellt ist, um eine Last von einer Kupplungsfeder (38) entgegenzunehmen, die auf das Druckelement (18) axial Druck ausübt; und
eine Nockenplatte (26), die an dem Druckelement (18) befestigt ist und die eine Erhöhung oder Reduktion der Reibungskraft der Antriebsreibungsplatten (19) und der angetriebenen Reibungsplatten (20) ermöglicht, **dadurch gekennzeichnet, dass**
ein Teil der Einstellplatte (37) mit der Nockenplatte (26) axial in Kontakt steht.

2. Lamellenkupplung nach Anspruch 1, wobei die Einstellplatte (37) gemeinsam mit der Nockenplatte (26) durch eine Vielzahl von Schrauben (47) zur gemeinsamen Befestigung gemeinsam an dem Druckelement (18) befestigt ist.

3. Lamellenkupplung nach Anspruch 2, wobei die Nockenplatte (26) außer durch die Vielzahl von Schrauben (47) zur gemeinsamen Befestigung noch durch eine Vielzahl von Passschrauben (48) an dem Druckelement (18) befestigt ist.

4. Lamellenkupplung nach Anspruch 3, wobei die Nockenplatte (26) außer durch drei Schrauben (47) zur gemeinsamen Befestigung noch durch drei Passschrauben (48) an dem Druckelement (18) befestigt ist.

5. Lamellenkupplung nach Anspruch 4, wobei die Schrauben (47) zur gemeinsamen Befestigung und die Passschrauben (48) in gleichen Abständen oder abwechselnd in Abständen in einer Umfangsrichtung des Druckelements (18) angeordnet sind.

6. Lamellenkupplung nach einem beliebigen der Ansprüche 3 bis 5, wobei ein Teil jeder Passschraube (48) von einem inneren Umfang der Einstellplatte (37) radial einwärts vorsteht, wenn das Teil von einer axialen Richtung des Druckelements (18) aus betrachtet wird.

7. Lamellenkupplung nach Anspruch 2, wobei in der Einstellplatte (37) zwischen jedem Paar aus Schrauben (47) zur gemeinsamen Befestigung ein schmales Teil (37a) ausgebildet ist, derart, dass die radiale Breite des schmalen Teils (37a) mindestens kleiner als ein Durchmesser jedes erweiterten Kopfes (47a) jeder Schraube (47) zur gemeinsamen Befestigung ist.

8. Lamellenkupplung nach Anspruch 2, wobei:
eine Vielzahl erster konkaver Gehäuseabschnitte (37b), die auf der der Nockenplatte (26) entgegengesetzten Seite offen sind, an der Einstellplatte (37) bereitgestellt sind; und
die erweiterten Köpfe (47a) der Vielzahl von Schrauben (47) zur gemeinsamen Befestigung in den ersten konkaven Gehäuseabschnitten (37b) aufgenommen sind, um ein Vorstehen von der Einstellplatte (37), die auf der Seite der Kupplungsfeder (38) vorragt, zu vermeiden.

9. Lamellenkupplung nach Anspruch 3, wobei eine Vielzahl von zweiten konkaven Gehäuseabschnitten (37c), die auf der Seite der Nockenplatte (26) offen sind, an der Einstellplatte (37) bereitgestellt sind, um erweiterte Köpfe (48a) der Vielzahl von Passschrauben (48) aufzunehmen.

## Revendications

1. Embrayage à disques multiples, comprenant :
une pièce extérieure d'embrayage (17) couplée à un élément d'entrée (16) ;
une pluralité de plaques de friction menantes (19) ajustées sur la pièce extérieure d'embrayage (17) de manière à tourner avec celle-ci ;
une pluralité de plaques de friction menées (20) aménagées en alternance avec les plaques de friction menantes (19) ;
un élément de compression (18) qui tourne conjointement avec un arbre de sortie (11) et qui peut être déplacé axialement de manière à comprimer les plaques de friction menantes (19) et les plaques de friction menées (20) ;
une plaque de réglage annulaire (37) aménagée sur un côté de l'élément de compression (18) de manière à recevoir une charge d'un ressort d'embrayage (38) qui presse axialement l'élément de compression (18) ; et
une plaque de came (26) fixée à l'élément de compression (18) qui permet une augmentation ou une réduction de la force de friction des plaques de friction menantes (19) et des plaques de friction menées (20), **caractérisé en ce que** :
une partie de la plaque de réglage (37) est axialement en contact avec la plaque de came (26).

2. Embrayage à disques multiples selon la revendication 1, dans lequel la plaque de réglage (37) est solidairement fixée à l'élément de compression (18) conjointement avec la plaque de came (26) par une pluralité de boulons (47) pour fixation solidaire.

3. Embrayage à disques multiples selon la revendication 2, dans lequel la plaque de came (26) est fixée à l'élément de compression (18) par une pluralité de boulons aléseurs (48) en plus de la pluralité de boulons (47) pour fixation solidaire.

4. Embrayage à disques multiples selon la revendication 3, dans lequel la plaque de came (26) est fixée à l'élément de compression (18) par trois boulons aléseurs (48) en plus de trois boulons (47) pour fixation solidaire.

5. Embrayage à disques multiples selon la revendication 4, dans lequel les boulons (47) pour fixation solidaire et les boulons aléseurs (48) sont agencés à intervalles égaux ou en alternance à intervalles dans la direction circonférentielle de l'élément de compression (18).

6. Embrayage à disques multiples selon l'une quelconque des revendications 3 à 5, dans lequel une partie de chaque boulon aléseur (48) fait saillie radialement vers l'intérieur d'une circonférence interne de la plaque de réglage (37) lorsque la partie est observée d'une direction axiale de l'élément de compression (18).

7. Embrayage à disques multiples selon la revendication 2, dans lequel une partie étroite (37a) est formée dans la plaque de réglage (37) entre chaque paire de boulons (47) pour fixation solidaire de sorte que la largeur radiale de la partie étroite (37a) soit plus petite au moins que le diamètre de chaque tête saillante (47a) de chaque boulon (47) pour fixation solidaire.

8. Embrayage à disques multiples selon la revendication 2, dans lequel :
une pluralité de premières portions concaves de logement (37b) ouvertes sur le côté inverse de la plaque de came (26) sont prévues sur la plaque de réglage (37) ; et
les têtes saillantes (47a) de la pluralité de boulons (47) pour fixation solidaire sont logées dans les premières portions concaves de logement (37b) de façon à éviter qu'elles ne dépassent de la plaque de came (37) en faisant saillie sur le côté du ressort d'embrayage (38).

9. Embrayage à disques multiples selon la revendication 3, dans lequel une pluralité de secondes portions concaves de logement (37c) ouvertes sur le côté inverse de la plaque de came (26) sont prévues sur la plaque de réglage (37) de façon à loger les têtes saillantes (48a) de la pluralité de boulons aléseurs (48).
